(19) Europäisches Patentamt / European Patent Office / Office européen des brevets

(11) **EP 3 454 159 B1**

(12) **EUROPEAN PATENT SPECIFICATION**

(45) Date of publication and mention of the grant of the patent:
**01.01.2020 Bulletin 2020/01**

(51) Int Cl.:
*G05D 1/10* *(2006.01)*      *G05D 1/00* *(2006.01)*
*F03D 17/00* *(2016.01)*

(21) Application number: **17382598.5**

(22) Date of filing: **06.09.2017**

(54) **METHOD AND DEVICE OF AUTONOMOUS NAVIGATION**

VERFAHREN UND VORRICHTUNG ZUR AUTONOMEN NAVIGATION

PROCÉDÉ ET DISPOSITIF DE NAVIGATION AUTONOME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.03.2019 Bulletin 2019/11**

(73) Proprietor: **Alerion Technologies, S.L.**
**20005 Donostia - San Sebastian (Gipuzkoa) (ES)**

(72) Inventors:
• **GHIGLINO NOVOA, Pablo, Francisco**
  **20005 DONOSTIA - SAN SEBASTIÁN (Gipuzkoa) (ES)**
• **BARBADILLO AMOR, Javier**
  **20005 DONOSTIA - SAN SEBASTIÁN (Gipuzkoa) (ES)**
• **COMÍN CABRERA, Francisco, José**
  **20005 DONOSTIA - SAN SEBASTIÁN (Gipuzkoa) (ES)**
• **PEÑAGARICANO MUÑOA, Oier**
  **20005 DONOSTIA - SAN SEBASTIÁN (Gipuzkoa) (ES)**

(74) Representative: **Herrero & Asociados, S.L.**
**Cedaceros, 1**
**28014 Madrid (ES)**

(56) References cited:
WO-A1-2017/050893     US-A1- 2016 017 866
US-A1- 2016 292 869

## Description

### Field of the invention

The present invention is related to Unmanned Aircraft Vehicles (UAV) and Remotely Piloted Aircraft Systems (RPAS) commonly known as drones or unmanned aircraft, using high-performance computing, computer vision, sensor fusion and autonomous navigation software.

More particularly, the present invention refers to a method and device (drone) of autonomous navigation, especially for extreme environments, having application for the inspection of components (e.g., components of a windmill or wind turbine), collection of objects, for cleaning tasks, etc.

### Background of the invention

Nowadays, drones can be applied in many fields. For example, human technicians who inspect wind turbines and their components like blades can be replaced by Unmanned Aircraft Vehicles (UAV) or Remotely Piloted Aircraft Systems (RPAS) to avoid these highly specialized technicians a tedious and quite expensive work as well as to prevent accidents while the technician is climbing for the inspection tasks.

An example of drones for this specific purpose is disclosed in EP2527649A1 referring to an UAV to inspect components of a wind turbine. The UAV is guided to the component, which needs to be inspected, having a certain predefined distance between the UAV and the component chosen in a way that high resolution images of the component can be gathered by the UAV. Thus, the inspection is done remotely controlled to detect automatically damages at the component based on the images gathered by the UAV or resulting image-data (e.g., detect heat patterns of cracks in blades of the wind turbine). GPS-data are used for the remote control of this UAV. Other relevant examples of drones autonomously inspecting structures are disclosed in WO2017050893A1 and in US2016017866A1.

However, an efficient detection of damages in the components of a windmill requires obtaining high-resolution images from a close distance and so requires the navigation method to make the UAV fly relative to the structure, and not using absolute positioning measurements such as GNSS (GPS, GLONASS, Galileo, Beidou), visual references, motion capture systems, or other methods.

On the other hand, the technology of LiDAR (Light Detection and Ranging) is well-known. LiDAR is a surveying method that measures distance to a target by illuminating that target with a pulsed laser light, and measuring the reflected pulses with a sensor. LiDAR scanning sensors are widely used in industries such as topographic surveying, 3D reconstruction, and Robotics. LiDAR measurements can be combined with inertial and timing measurements for accurate 3D reconstruction of surfaces and objects. This is now widely being used in autonomous cars, surveying, and object reconstruction.

Therefore, it is highly desirable to provide a navigation method for an unmanned aircraft vehicle which allows trajectory adjustments to detect and track individual objects or components of a structure while navigating at a relative distance from the object/structure.

### Summary of the invention

The present invention solves the aforementioned problems and overcomes previously explained state-of-art work limitations by providing a method of autonomous navigation for a drone (UAV, RPAS) which uses a combination of measurements obtained by a LiDAR laserscanner, which can either be two-dimensional (2D) or three-dimensional (3D), image processing and inertial sensor fusion.

A LiDAR based autonomous navigation device (drone) is disclosed to accurately fly around a target, which is an individual object or a structure composed of multiple objects to be tracked (e.g., a wind energy generator), the drone being configured to:

- Fly at a predetermined distance from the target (e.g., the windmill structure). This distance can be variable or fixed, but always a predetermined distance which is relative from the drone to the target.
- Keep the target (e.g., the windmill structure) centered in the image recorded by the camera of the drone. The LiDAR and the camera are calibrated such that for each image frame, the drone knows what pixels correspond to LiDAR measurements. This allows to keep one or more objects of the target structure (e.g., the wind turbine blades) always centered with respect to the drone.

- Re-align the drone in case of wind disturbances, inaccurate trajectory tracking, or corrections. If the LiDAR measurements indicate that the structure is no longer centered with respect to the camera, the drone can re-align itself instantaneously.

- Maintain the structure centered and at a fixed distance regardless of orientation of the objects (e.g., the blades of the windmill).

A first aspect of the present invention refers to a method of autonomous navigation for tracking objects of a wind turbine in accordance with claim 1.

In a second aspect of the present invention, a device (drone) implementing the method of autonomous navigation described before is disclosed. The device comprises a (2D or 3D) LiDAR scanner, computer vision sensor and processing means of an on-board computer (OBC) configured to perform the method described before.

In a last aspect of the present invention, a computer program is disclosed, comprising computer program code means adapted to perform the steps of the described method, when said program is run on processing means of a device for autonomous navigation (UAV, RPAS, commonly referred to as drone).

The wind sector is a main scenario of application and a business opportunity with the greatest potential, but the present invention also has other applications, mainly focused on irregular or lattice structures (not a cube): Towers of CSP (Concentrated Solar Power), observation towers, drop towers of amusement parks, lighthouses, radio-television towers, transmission towers, hanging bridges,...

The drone and method of autonomous navigation in accordance with the above described aspects of the invention has a number of advantages with respect to prior art, which can be summarized as follows:

- The present invention provides more accurate measurements related to the object to be tracked by the drone as its flight can be adjusted at all times to obtain high-resolution images. In a particular application, the invention constitutes an autonomous platform to inspect the blades of wind energy generators, regardless of their size, geographical location, and orientation. This is achieved due to the computer vision and LiDAR based relative navigation technologies and implementation applied to navigating around wind turbines, and keeping the platform centered with respect to the windmill structure at all times.
- The present invention also provides a method that is consistent and repeatable regardless of wind conditions and geometry of the windmill. LiDAR measurements ensure a correct tracking and centering of the blades in the image that GNSS positioning and human piloting cannot provide. The results are repeatable and consistent with every flight, making it a reliable procedure and tractable throughout time.
- The present invention eliminates the need for human interaction, making the platform fully autonomous that performs an automatic procedure, regardless of the geometry of the windmill structure.
- The present invention reduces considerably inspection times as it allows the UAV to follow an optimal path more accurately. Not prone to GNSS inaccuracies, or human input.

These and other advantages will be apparent in the light of the detailed description of the invention.

**Description of the drawings**

For the purpose of aiding the understanding of the characteristics of the invention, according to a preferred practical embodiment thereof and in order to complement this description, the following Figures are attached as an integral part thereof, having an illustrative and non-limiting character:

Figure 1 shows an application scenario of an autonomous navigation device for tracking a wind energy generator, according to a preferred embodiment of the invention.

Figure 2 shows a simplified state machine of a LiDAR sensor in the autonomous navigation device for detecting the wind energy turbine.

Figure 3 shows the waypoints of the trajectory and altitude thresholds for take-off and landing of the autonomous navigation device.

Figure 4 shows an ascent manoeuvre of the autonomous navigation device to clear windmill.

Figure 5 shows a flow diagram of control of the autonomous navigation device.

Figure 6 shows a corner turn trajectory of the autonomous navigation device.

Figure 7 shows an orbital turn trajectory of the autonomous navigation device. Figure 8A shows a reactive trajectory adjustment of the autonomous navigation device when the blade is too close.

Figure 8B shows a reactive trajectory adjustment of the autonomous navigation device when the blade is too far.

Figure 8C shows a reactive trajectory adjustment of the autonomous navigation device when the blade is not centered.

**Preferred embodiment of the invention**

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural systems of autonomous navigation devices or drones. Any particular architectural layout or implementation presented herein is provided for purposes of illustration and comprehension only and is not intended to limit aspects of the invention.

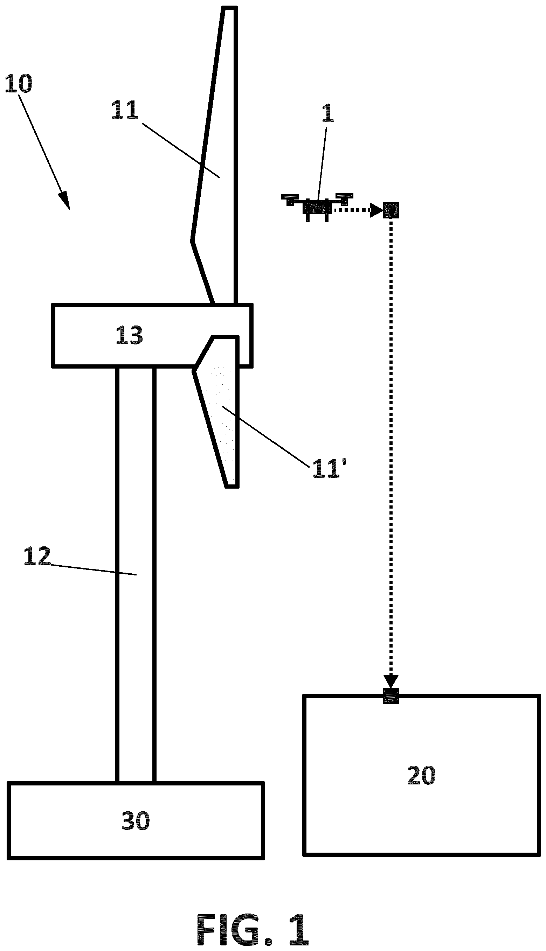

A preferred embodiment of the invention refers to a navigation method of a drone (1) to detect and track individual parts of a windmill (10) which comprises, as shown in Figure 1, the following objects to be tracked: blades (11, 11'), pole (12) and nacelle (13). This method is used primarily to detect the orientation of the windmill (10) and adjust the position of the drone (1) to be in front of the nacelle (13) to start the inspection. The proposed method is also used to detect the end of the blades (11, 11') and to aid in making circular turns by keeping a constant distance to the tip of the blades (11, 11'). The basic operation of this drone (1) is the following:

- The operator positions the windmill blades (11, 11') such that one of them (11) is pointed towards the sky as vertical as possible, making an inverted Y shape.
- The drone (1) is positioned in front of the nacelle (12) to start the inspection.
- The vertical blade (11) is inspected vertically with 90 degree turns and the other two blades (11') are inspected, first the leading edge, then trailing edge, then the two shells.
- The drone (1) lands in the take-off position or ground (20).

The vertical blade (11) is inspected by the drone (1) in the following manner:

- Take-off and reach a predetermined altitude, preferably 10 meters, and measure distance to windmill pole (12) and the width of the structure.
- Start ascension in front of the pole (12), while tracking the structure through LiDAR measurements of distance and determining the width continuously.
- Detect one and then two of the blades (11') while ascending and tracking the pole (12).
- Keep ascending and tracking the pole (12) and the blades (11') until they join in a circular structure, that is, the nacelle (13) to determine the position and orientation of the drone (1) with respect to the nacelle (13).
- Adjust the position of the drone (1) such that it is centered with respect to the nacelle (13) and at a fixed distance.
- Ascend a predetermined altitude and approach the beginning of the third blade (11) at a fixed distance.
- Ascend the third blade (11), the most vertical one, which can be quite slanted, while keeping this vertical blade (11) centered with respect to the camera of the drone (1).
- Turn 90 degrees counterclockwise at the tip of the vertical blade (11) to inspect another side.
- Descend while tracking the vertical blade (11), adjust position to keep the camera centered on the vertical blade (11).
- Turn 90 degrees counterclockwise in a quarter of a circle at the tip of the vertical blade (11) to inspect another side.
- Ascend while tracking the vertical blade (11) and adjust position to keep the camera centered on the vertical blade (11).
- Turn 90 degrees counterclockwise in a quarter of a circle at the tip of the vertical blade (11) to inspect another side.
- Descend while tracking the vertical blade (11) and adjust position to keep the camera centered on the vertical blade (11).
- Turn 90 degrees counterclockwise in a quarter of a circle at the tip of the vertical blade (11) to inspect another side.
- Return to land on the ground (20) while keeping the windmill (10) structure at a safe distance.

The other two blades (11') are inspected by the drone (1) in the following form:

- Track leading edge through a line that is approximately 30 degrees below the horizontal line.
- Turn 180 degrees to inspect the trailing edge.
- Track trailing edge through a line that is approximately 30 degrees below the horizontal line.
- Turn 90 degrees to inspect the top shell of the blade (11').
- Descend at a 30 degree angle while tracking the blade (11').
- Descend to the bottom shell of the blade (11').

- Ascend at a 30 degree angle.
- Continue onto the next place and repeat the above procedure.

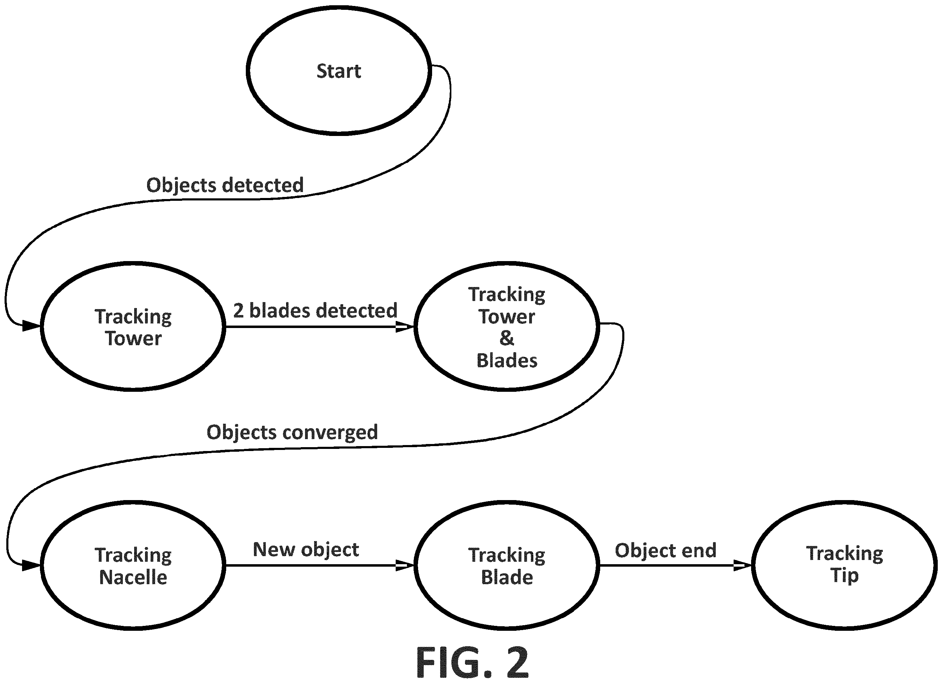

For object tracking, the drone (1) comprises at least a LiDAR sensor, which can measure the distance to a surface or several surfaces with each measurement. The information provided by each LiDAR measurement from the LiDAR sensor can be used to determine the width, height, and distance to several objects at the same time, and track these objects in time with successive measurements. Firstly, all measurements from the LiDAR sensor which distance is closer or further than a threshold of interest are discarded by a segmentation algorithm executed by processing means, an on-board computer, of the drone (1). Also a filter removes the isolated measurements in terms of relative distance to avoid noisy data. Then the measurements are grouped by relative distance using a threshold that suits the wind turbine model. For example, the joint of the blade (11, 11') with the nacelle (13) may not be considered as a single object because the nacelle (13) is several meters nearer than the blade (11, 11'). For this specific case it is interesting to adapt the threshold to be able to segment those objects instead of getting a single object which can be later post processed. The result of this segmentation is an array of LiDAR objects identified by the position of the samples. Then, a tracking algorithm is applied by the drone (1) for each detected array of segmented objects, in order to discard those objects that are not persistent in time, like noisy measurements, flying objects or insects, or any other temporary event. For every array of segmented objects, each object is checked against the currently tracked objects. For each segmented LiDAR object, a set of attributes or features is computed for this tracking: if object features match any tracked object, the new position is updated and the object remains tracked; if features do not match any incoming object for several readings, then the track is lost and the object is removed from the list. To avoid losing tracking due to noisy LiDAR measurements there is a threshold for consecutive measurements where the object is lost. This means that if an object is occluded for a couple of iterations, it will not be lost. The output of the algorithm for each LiDAR scan is an array of tracked objects with identifier, tracking state and features. Considering that a LiDAR object is a group of LiDAR readings defined by distances and angles, then the following features are calculated: mean distance, projected distance, width, height, left angle, right angle, top angle and bottom angle. These features and identifier are enough to detect the windmill parts. The wind turbine detection uses the tracked objects to match a search pattern based on the navigation around wind turbines. It uses previous knowledge of the shape of the windmill and the navigation route. For example, it is known that when the drone (1) is facing the tower or pole (12), no object can be near the wind turbine over a certain distance to the ground (20). The wind turbine detection algorithm, whose state machine is shown in Figure 2, for searching the pole (12) starts after a height threshold to avoid low vegetation and objects and look for an object of certain width in the center region. Using this information a state machine is able to define the navigation states and the possible transitions and events. As the LiDAR scanner has a reduced field of view, the tracked objects do not appear as complete objects and this situation forces to adapt the navigation states to match partial objects in the desired positions.

Figure 2 presents a simplified states and transitions scheme for configuring the drone (1) to perform the detection of the windmill (10) by LiDAR. The state "tracking tower" is reached as soon as a centered object within the desired distance and width thresholds appears for some consecutive iterations. Although it is a simple algorithm, it is very robust because no objects are assumed to be in the scene around the pole (12). The state machine is in this state while the object is tracked or the two blades (11'), the blades (11') which are not in a vertical position but in a lower one, appear in scene. The conditions for tracking are very permissive to avoid losing the object with vibration, temporary occlusions or noisy readings. The event "two blades detected" triggers the transition to state "tracking tower and lower blades". This event occurs when two objects appear at the right and left of the previously tracked object, i.e., the tower or pole (12). Eventually those three objects converge in the nacelle (13) at some iteration, which will trigger the transition to "tracking nacelle". This state is very important because the height of the nacelle (13) is used to calculate the navigation prism. Finally when a new object aligned with the nacelle (13), but further and narrower, appears in scene, the transition to "tracking blade" state is triggered. This state, which tracks the vertical blade (11), will transition to "tracking tip" when the object end is detected on top.

To add more robustness to the LiDAR detection, computer vision is applied combined with LiDAR navigation. In the following navigation stages, the same states of the simplified state machine are repeated with minor variations. Also the information from previous stages is used, such as the position of the nacelle (13). As LiDAR readings can be calibrated to correspond to pixels in the camera of the drone (1), the calibration result is a rotation matrix and a translation matrix that project LiDAR measurements on the image reference system. The calibration allows the LiDAR measurement to be shown in a 2D RGB or greyscale image. This calibration gives an array of measurements with distance, x and y position, in the image for every frame captured by the camera. This is very useful to enhance computer vision algorithms as it adds depth information to image. For example, when the nacelle (13) is detected using LiDAR, a computer vision algorithm for detecting nacelle (13) may add robustness and precision. The computer vision algorithm searches for three blades (11, 11'), each blade can be considered as a pair of parallel segments, converging in a central point, separated by 120 degrees angles. The LiDAR results show which pixels in the image are close to the borders of the blade (11, 11'). In a preferred embodiment of the invention, the nacelle (13) is detected when both LiDAR and computer vision report its detection.

Although the windmill detection and tracking capabilities provided by LiDAR as described before theoretically make navigation agnostic to dimensions and position of the windmill (10), it is desirable to provide an initial estimate of the relative position of the drone (1) and the windmill pole base (30), as well as the main dimensions of the windmill (10). This is for the navigation to be safer and more robust to drone sensor errors and environmental uncertainties. All target locations are defined as poses where the RPAS is assumed to be horizontally stabilized, i.e. the pitch and roll angles are zero. Therefore, the waypoints corresponding to those targets **P** can be defined as an array of four elements: the three linear Cartesian coordinates (**x** ≡ front, **y** ≡ left and **z** ≡ upwards) and the angular heading $\theta$.

$$P= [x,\ y,\ z,\ \theta]$$

This navigation scheme assumes that the drone (1) is configured and armed on flat terrain, within a 10-20 meters range from the windmill pole (12) and approximately facing towards it, so as to ensure that the nearest object detected by the LIDAR after take-off is the pole (12) itself.

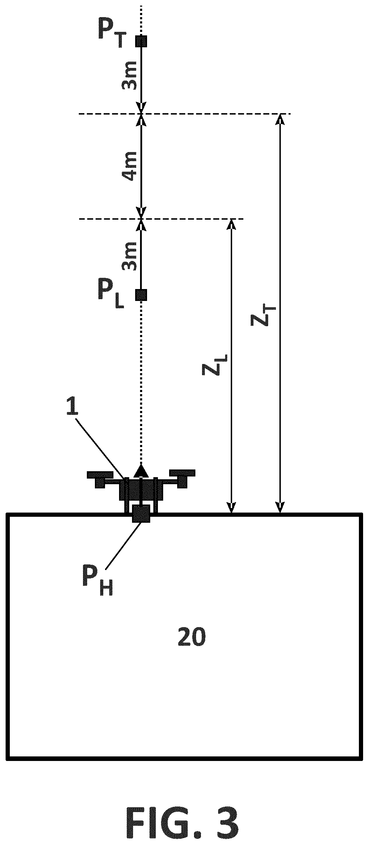

As shown in Figure 3, upon inspection configuration and initialization, the home location $P_H$ = [0, 0, 0, 0] is defined as the current pose of the drone (1) and an automated standard take-off manoeuvre is commanded. Once a minimum take-off altitude threshold $z_T$ is reached, the on-board computer, OBC, of the drone (1) takes control and starts commanding its navigation towards an initial waypoint directly above the home location at an altitude 3m above, said initial waypoint $P_T$ = [0, 0, 0, $z_T$ + 3]. Once a nominal inspection flight is completed, the OBC commands the drone (1) to navigate towards a final waypoint $P_L$ = [0, 0, 0, $z_L$ - 3], directly above the home location and at an altitude 3m inferior to a maximum landing altitude threshold ($z_L$). Once said threshold is reached, an automated standard landing manoeuvre is commanded targeting the home location and the OBC releases control. The aim of these altitude thresholds and the buffers between themselves and the initial/final waypoints, as pictured in Figure 3, is to ensure safe and robust control transitions between OBC and automated take-off/landing manoeuvers. In case of critically low battery or anomalous behavior, navigation can be instantly aborted by the human pilot at any point by triggering an automatic return to home manoeuvre. This manoeuvre follows one of two possible behaviors:

a. If the drone (1) is horizontally within 10m of the home position $P_H$ or is inspecting the shells of the oblique blades (11') from below, the drone (1) will navigate horizontally directly to the location vertically above the home position, then descend towards it and land.

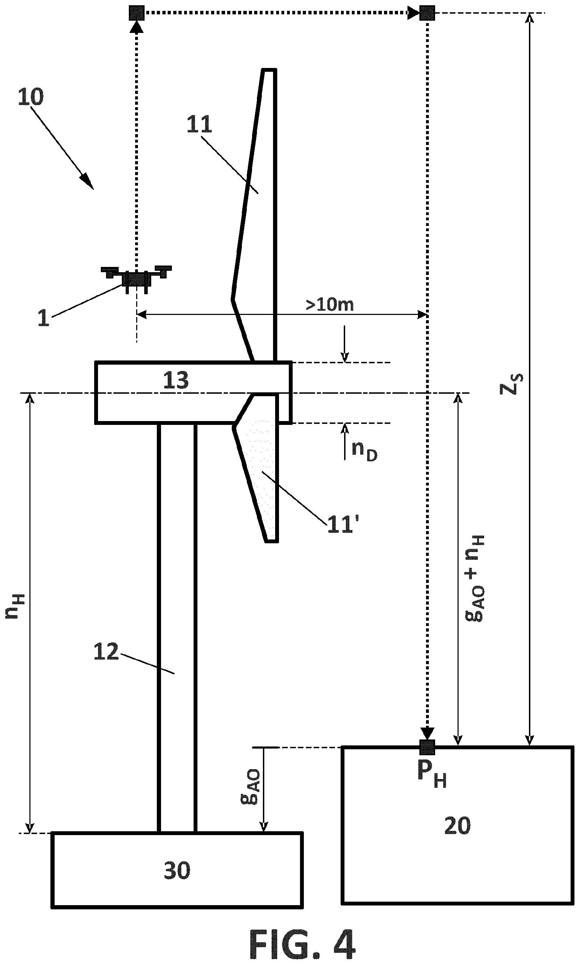

b. If the drone (1) is horizontally further than 10m from the home position $P_H$ and is not inspecting the shells of the oblique blades (11') from below, the drone (1) will first ascend vertically until a defined altitude threshold ($z_S$), then navigate horizontally to the location vertically above the home position, and finally descend towards it and land. This additional ascent manoeuvre, as shown in Figure 4, is performed to ensure clearance of the windmill's structure. Therefore, the altitude threshold ($z_S$) corresponds to the sum of the windmill's nacelle height ($n_H$), the ground altitude offset ($g_{AO}$) between the windmill pole base (30) and the RPAS home location ($P_H$), the nacelle radius $n_D/2$, $n_D$ denoting the nacelle diameter, the blade length ($b_L$) plus a safety buffer of 20 meters, i.e.,

$$z_S = n_H + g_{AO} + n_D/2 + b_L + 20$$

The altitude threshold ($z_S$) of the second case described above acts both ways, meaning that if during normal operation the drone (1) reaches that altitude level, which indicates an indefinite/anomalous ascent behavior, an abort will be automatically generated causing the drone (1) to return to the home position and land. In addition to this automated return to home manoeuvre, the human pilot is enabled to override the commands from the OBC of the drone (1) at any point, taking manual control of the drone (1) and landing it with the radio controller.

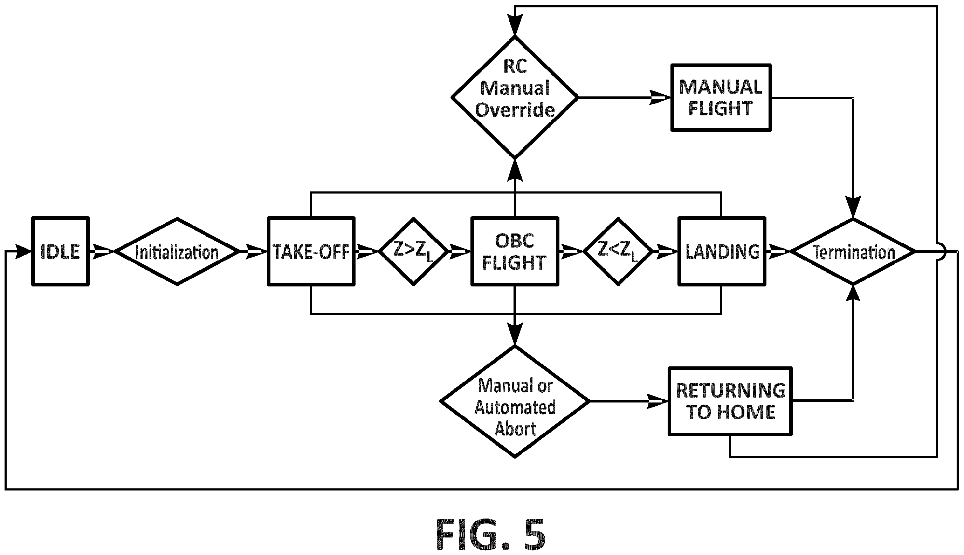

Figure 5 shows a flow diagram of the aforementioned different control behaviours to manoeuvre the drone (1).

Upon inspection initialization disclosed before, a skeleton of main navigation waypoints is pre-configured according to the main position and dimensions of the windmill (10), as well as the desired blade inspection distances at the narrowest section of the blade (11, 11'), i.e. the tip, and at the widest section of the blade (11, 11'), i.e. the longest cross-sectional chord line on the shells. These waypoints establish the start and target locations for every trajectory to be performed during a full windmill inspection, with the first and last waypoints corresponding to the aforementioned post-takeoff and pre-landing waypoints. A total of 24 waypoints are defined for the blade inspection phases, corresponding to the waypoints in front of the blade's root and tip extremes for each of the four sides, i.e. leading/attack edge, trailing/exit edge and lower/upper shells of each of the three blades (11, 11'). Additionally, safety buffer factors are applied to the nacelle height ($n_H$) and the blade length ($b_L$) in order to obtain conservative estimates and guarantee that the altitude of the nacelle and the length of the blade are cleared to avoid collisions. Taking this into account, the blade inspection waypoints are defined radially around the rotation axis of the nacelle (13). The distance from said axis to the root inspection waypoints is equal to the diameter ($n_D$) of the nacelle (13), while the distance from the axis to the tip inspection waypoints is equal to the blade length ($b_L$). Both radial distances are modified by the aforementioned safety buffer factors. An additional nacelle control waypoint $P_N$, at a pre-configured distance $d_N$ from the nacelle (13) and aligned with its axis, is defined as the entry/exit location to be visited before/after the blade inspection phases. The initial assumption is that the nacelle axis is perfectly aligned with the takeoff heading of the drone (1). The 8 waypoints pertaining to each of the three blades (11, 11') inspection phases obey a number of relative positioning conditions that configure them as the corners of a trapezoidal prism, with rhombi as parallel bottom/top faces. These rhombi are non-equal but their diagonals are aligned among themselves, one of them being parallel to the plane containing the basal axes of three blades (11, 11') and the other diagonal being perpendicular to it. In the configuration where the nacelle (13) is braked, this implies that one of the diagonals is aligned with the chord line of the blades, which links the leading and trailing edges of each cross-section, while the other is perpendicular to it. The initial assumption is that the top face of all prisms is a square with diagonals equal to twice the desired inspection distance at the tip, $d_T$, of the blades (11, 11'). On the other hand, their base face has a minor diagonal with that same length and a major diagonal with a length of twice the desired inspection distance at the root, $d_R$, of the blade shells (11, 11'). The coordinates of all these waypoints are susceptible to in-flight modifications to account for the actual dimensions/position of the windmill (10) or accumulated sensor errors. However, when one of those waypoints is modified, the correction is propagated the rest fulfilling a set of assumptions:

- Cartesian corrections, both horizontal and in altitude, of the nacelle control waypoint $P_N$ are performed equally to all blade inspection waypoints, i.e., the difference in altitude or horizontal position is applied to all waypoints as a pure translation.
- Heading corrections in the nacelle control waypoint $P_N$ are propagated to all blade inspection waypoints as a rotation of the difference in heading angle around the vertical axis going through the corrected pole position estimate i.e., once Cartesian corrections have been applied.
- Normal corrections in blade inspection waypoints are only propagated within their corresponding bottom/top prism face, maintaining modifications of both rhombi decoupled. This propagation can occur in one of two manners:

  i) If the modified waypoint is the first one to be visited in its corresponding top/bottom prism face, the difference in its Cartesian coordinates is applied as a pure translation to the rest of waypoints belonging to the same prism face.
  ii) If another waypoint has been previously visited in the same top/bottom prism face, the correction is propagated so as to maintain the rhombus defined by the latest two waypoints visited and the heading of both rhombus diagonals. These known values determine the length of the rhombus side and the unit vectors and internal semi-angles of its first/second corner diagonals, so that its third and fourth corners can be corrected.

- Radial corrections in the tip face of any prism are propagated directly as equal pure translations to the rest of waypoints belonging to the same tip face. For the vertical blade (11), this translation only affects the altitude coordinate, while for oblique blades (11') it also affects the horizontal coordinates according to the heading angle of the nacelle (13) and the corresponding blade inclination angle: approximately $\pm 120$ degrees from the upwards direction or approximately $\pm 30$ degrees from the horizontal plane.

The transitions between these waypoints can be performed applying the following trajectories types:

- Straight path: the start waypoint ($P_S$) and final waypoint ($P_F$) are linked by a straight line and have identical headings, so that it is maintained constant along the whole manoeuvre. The linear Cartesian coordinates vary linearly with an interpolation parameter ts according to the start and final coordinate values, as shown in equation 1:

$$x(t_s) = x_S + (x_F - x_S)t_S \qquad t_S \in [0,1]$$
$$y(t_s) = y_S + (y_F - y_S)t_S \qquad t_S \in [0,1]$$
$$z(t_s) = z_S + (z_F - z_S)t_S \qquad t_S \in [0,1]$$
$$\theta(t_s) = \theta_S = \theta_F \qquad t_S \in [0,1]$$

<u>equation 1</u>

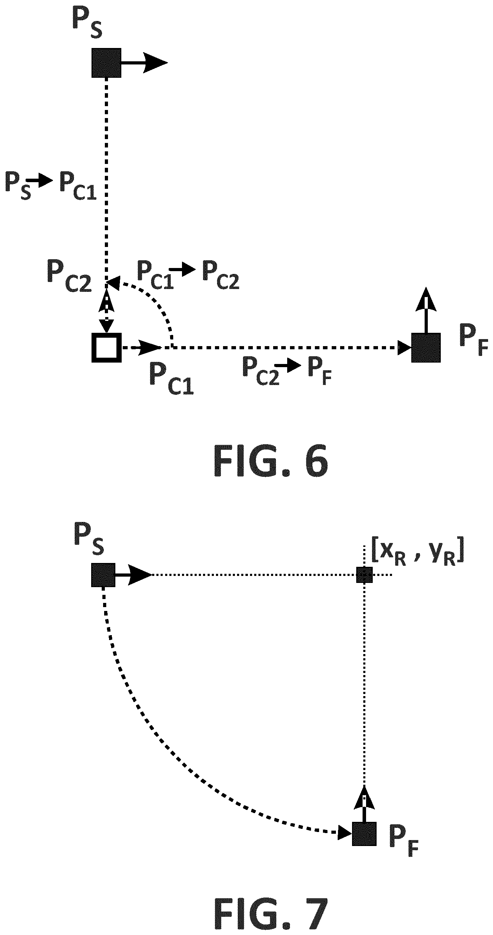

- Corner turn: the manoeuvre is divided into three stages, where all the heading variation is concentrated in a single point turn, executed in-between two purely lateral translations with constant headings that cover the distance in between the initial and final target waypoints. This results in an initial straight trajectory from the start waypoint ($P_S$) to a first interim waypoint (Pci), a point turn between $P_{C1}$ and a second interim waypoint ($P_{C2}$) and a final straight trajectory from $P_{C2}$ to final waypoint ($P_F$), as described by equation 2 and illustrated by Figure 6.

$$P_s \rightarrow P_{C1} : [x_S + (x_{C1} - x_S)t_C , y_S + (y_{C1} - y_S)t_C , z_S = z_{C1} , \theta_S = \theta_{C1}], \quad t_C$$
$$\in [0,1]$$

$$P_{C1} \rightarrow P_{C2} : [x_{C1} = x_{C2} , y_{C1} = y_{C2} , z_{C1} = z_{C2}, \theta_{C1} + t_\theta(\theta_{C2} - \theta_{C1})], \quad t_\theta$$
$$\in [0,1]$$

$$P_{C2} \rightarrow P_F : [x_{C2} + (x_F - x_{C2})t_C , y_{C2} + (y_F - y_{C2})t_C , z_{C2} = z_F , \theta_{C2} = \theta_F], t_C$$
$$\in [0,1]$$

<div align="center">

equation 2

</div>

- Orbital turn: the manoeuvre is executed as a continuum, uniformly varying the heading as the drone (1) translates laterally, following an arc that goes through the start and final target waypoints with its curvature center at the intersection of the initial and final heading directions of the drone (1). The resulting trajectory is defined by the intersection ($[x_R, y_R]$) of the lines defined by the horizontal coordinates and heading angles of the start waypoint ($P_S$) and final waypoint ($P_F$) and the distance from any of these waypoints ($P_S$, $P_F$) to said intersection ($[x_R, y_R]$), following equation 3 as shown by Figure 7.

$$\theta(t_R) = \theta_S + (\theta_F - \theta_S)t_R \qquad t_R \in [0,1]$$
$$x(t_R) = x_R - \sqrt{(x_R - x_S)^2 + (y_R - y_S)^2} \cos(\theta(t_R)) \qquad t_R \in [0,1]$$
$$y(t_R) = y_R - \sqrt{(x_R - x_S)^2 + (y_R - y_S)^2} \sin(\theta(t_R)) \qquad t_R \in [0,1]$$
$$z(t_R) = z_S = z_F \qquad t_R \in [0,1]$$

<div align="center">

equation 3

</div>

The pre-generated trajectories determined by the waypoints described before are valid for a successful inspection only in the event of having perfect knowledge at all times of all dimensions of the windmill (10), positions of the blades (11, 11') and GPS location of the drone (1). Since these are not attainable assumptions, it is necessary to perform a range of trajectory adjustments according to the described object detections and windmill tracking by LiDAR, so as to correct any errors or uncertainties in the aforementioned data. The nature and aim of these adjustments is to:

- Find the correct alignment with the axis of the nacelle (13), i.e. the heading normal to the plane formed by the three blades (11, 11'), in order to sweep along the blade edges and shells as perpendicularly as possible and be able to locate accurately any detected damages. When using orbital turns, the adjustment is independent from the take-off location relative to the nacelle (13), since a single continuous turn will suffice to reach the correct location. However, in the case of corner turns, as described before, the adjustment manoeuvre can imply:

  ◦ Performing no turns if taking off frontally to the nacelle (13).
  ◦ Performing one turn if taking off laterally to the nacelle (13).
  ◦ Performing two turns if taking off from behind the nacelle (13).

- Find the correct height of the nacelle (13), i.e. the altitude at which the two lower blades (11') and the pole (12) as detected by the LiDAR converge, in order to avoid collisions when navigating in the vicinity of the nacelle's rear protrusion or missing the root of the blades in the inspection footage. This can imply:

  ◦ Elongating the initial ascent, gradually raising the target location by a fixed amount, in those cases where the detection of the nacelle (13) by the LiDAR has not occurred when the initially estimated altitude is reached.
  ◦ Shortening the initial ascent, instantly bringing the manoeuvre to an end, in those cases where the LiDAR detection has already occurred before the initially estimated altitude is reached.

- Find the correct location of the tip of the blades (11, 11') by the LiDAR, i.e. in 3D-case the tip is detected, in 2D-case, the position is the one at which the inspected blade is no longer detected, in order to ensure that the tip of the blades (11, 11') is captured in the inspection footage. This can imply:

  ◦ Elongating the sweep along the blade (11, 11'), gradually increasing the distance from the manoeuvre start to the target location by a fixed amount, in those cases where the tip detection by the LiDAR has not occurred when the initially estimated target is reached.
  ◦ Shortening the sweep along the blade (11, 11'), instantly bringing the manoeuvre to an end, in those cases where the LiDAR detection of the tip has already occurred before the initially estimated target is reached.

- Maintain the blades centered and at the desired inspection distance (di) in order to get full coverage and focused footage for a complete damage inspection. The desired distance from the blade (11, 11') can be calculated according to different criteria:

  ◦ Constant distance, where the blade (11, 11') is kept at the same distance regardless of side under inspection and altitude, as in equation 4. This is ideal for cameras with a shallow field of focus and cases where image occupancy of the blade (11, 11') is not critical. In equation 4: Symbols 'b', 's' and 'e' denote the identifier of the inspected blade, side and extreme respectively. Symbols 'A', 'L', 'E' and 'U' denote the different sides of a blade: leading (attack) edge, lower shell, trailing exit edge and upper shell respectively.

$$d_I(b,s,e,x,y,z) = d_T = d_R, \quad \forall s \in \{A, L, E, U\}$$

equation 4

o Constant image occupancy, where the portion of the image occupied by the blade (11, 11') is maintained according to the width of the blade as detected by the LiDAR and the characteristics of the camera equipped by the drone (1). This is ideal to maximize the amount of detail obtained in the narrower sections, i.e. blade tip from edges, while still getting a full view of the wider sections, i.e. blade root from shells.

  ◦ Interpolated distance, where the distance is kept constant on the edges of the blade (11, 11') due to their roughly constant width but is linearly interpolated with the ratio of the distance from the current location to the root of the blade (11, 11') being inspected over the total length $r_R$ of the blade (11, 11'), $r_R$(b, s, x, y, z) being calculated using equation 5. The resulting equations, shown in equation 6, are a useful simplification of the constant image occupancy criterion shown above, which does not guarantee constant occupancy but maintains most of its benefits without the need for explicitly calculating image occupancy of the blade (11, 11').

$$r_R(b,s,x,y,z) = \frac{\sqrt{(x - x_{bsR})^2 + (y - y_{bsR})^2 + (z - z_{bsR})^2}}{\sqrt{(x_{bsT} - x_{bsR})^2 + (y_{bsT} - y_{bsR})^2 + (z_{bsT} - z_{bsR})^2}}$$

equation 5

$$d_I(b, s, e, x, y, z) = d_T, \qquad \forall s \in \{A, E\} \qquad \forall z \in \left[ z_{b\{\frac{A}{E}\}R}, z_{b\{\frac{A}{E}\}T} \right]$$

$$d_I(b, s, e, x, y, z) = d_T + r_R\left(b, \frac{L}{U}, x, y, z\right) \cdot (d_r - d_T), \quad \forall s \in \{L, U\} \quad \forall z$$

$$\in \left[ z_{b\{\frac{L}{U}\}R}, z_{b\{\frac{L}{U}\}T} \right]$$

<u>equation 6</u>

Once the desired pose according to LiDAR object detections and windmill tracking is obtained, it is used to correct the trajectory followed by the drone (1) using one or more of three different types of adjustments:

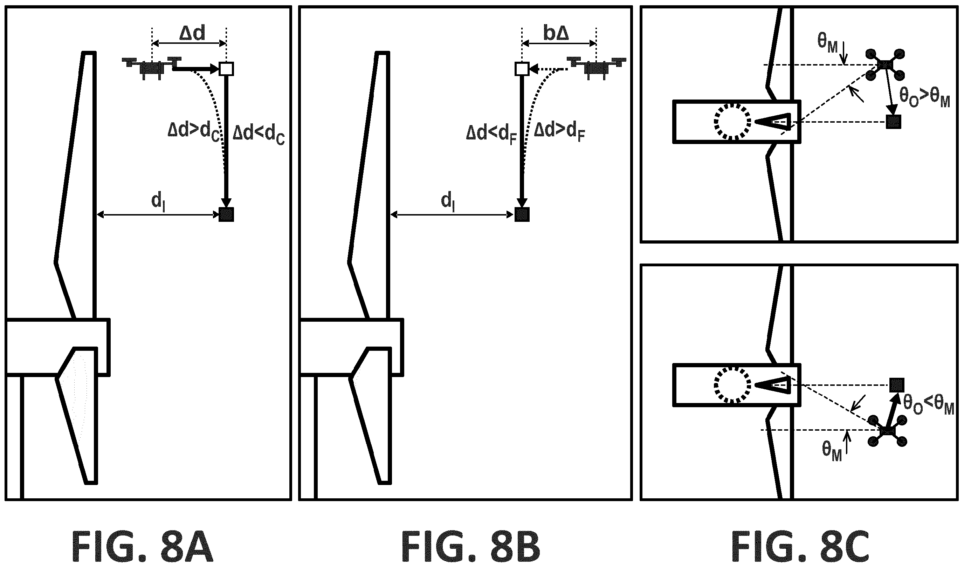

- Reactive: The adjusted desired position is used to update the immediate target of the drone (1), whether it is the final target of the manoeuvre or an interim target of the trajectory, while continuing the execution of the manoeuvre. This ensures continuous reactive adjustment for the drone (1) to smoothly adjust to any changes in the desired trajectory as soon as the LIDAR detects them, as depicted by continuous-line trajectories in Figures 8A-8C. Only if the magnitude of the drone (1) pose error/s exceeds predefined thresholds, the reactive adjustment will halt the progress of the manoeuvre, creating an ad-hoc adjustment target, until the error/s are brought back within acceptable levels and the manoeuvre is resumed, as shown by the dashed-line trajectories in Figures 8A-8C. These thresholds will ensure that:

    ◦ The blade (11) is not too close, i.e. the error between the desired inspection distance ($d_I$) and the actual distance $\Delta d = d - d_I$, to the blade (11) is lower than a configurable negative threshold ($d_C$), to prevent risk of collision and ensure the image is focused, as seen in Figure 8A.
    ◦ The blade (11) is not too far, i.e. the distance error is higher than a configurable positive threshold ($d_F$), in order to ensure the image is focused and prevent excessive deviation from the desired trajectory, as shown by Figure 8B.
    ◦ The blade (11) is within the field of view of the camera, i.e. that the maximum angle of the blade detected by the LiDAR ($\theta_M$) is smaller in absolute value to a configurable threshold ($\theta_O$), so that both edges are within the captured image, as in Figure 8C. This is achieved by making said threshold smaller or equal to half the horizontal field of view of the camera equipped by the drone (1). These kind of reactive adjustments are a hard priority of the navigation strategy, since complete footage capture throughout all sweep trajectories of all blades is necessary to enable full damage detection.

- Predictive: If the current desired position of the drone (1) is not the final target of the manoeuvre, but an interim target of the trajectory, the adjustment can be extrapolated to adjust the final target of the manoeuvre accordingly. The extrapolation depends on the type of manoeuvre, its characteristics and its starting waypoint. This type of adjustment aims at minimizing the magnitude of reactive adjustments and the likelihood of breaching manoeuvre-halting thresholds in the remainder of the manoeuvre, thus making the trajectory smoother and more efficient.
- Corrective: When the final target of an inspection manoeuvre is reached, specific adjustment manoeuvres are performed to refine the location of the corresponding waypoint. Once the adjustment manoeuvre is completed, it is then propagated incrementally to the waypoints yet to be visited. This type of adjustments have a double goal:

    ◦ Making the start and target locations of remaining manoeuvres as accurate as possible, in order to minimize the frequency and magnitude of reactive/predictive adjustments.
    ◦ Guaranteeing that areas of special interest, i.e. the roots and tips of the blades (11, 11'), are captured by the inspection footage with emphasized care and extension.

All the described trajectory planning and adjustments are managed and calculated by the OBC of the drone (1). This is done according to the configuration data and override remote control commands received from the user interface, i.e. tablet/laptop and radio controller, and sensor data provided by the LiDAR sensor/camera and the autopilot. The resulting trajectories and adjustments are then sent as pose/velocity commands to the autopilot, which translates them into the appropriate control signals to actuate the motors for the drone (1) to perform the desired motion in a stabilized manner. Said commands transmitted from the OBC to the autopilot can be of two different types:

∘ Interim target pose commands transmitted to the autopilot, which then commands the drone (1) to reach the desired pose. This is only suitable for autopilots capable of internal pose control. In this case, the target of the autopilot corresponds to the interim trajectory location the drone (1) must reach to advance towards the final target while it effectively tracks the trajectory.

∘ Linear and angular velocity commands transmitted to the autopilot, which in turn controls the attitude of the drone (1) to achieve the desired velocities in a stabilized fashion. In this case, the interim target poses from the previous case are not directly transmitted, but rather internally used by the OBC to calculate the drone (1) pose error and calculate the desired velocities required to correct it and smoothly reach that desired location. This type of commands centralizes trajectory tracking and velocity calculations in the OBC, reducing the dependency on the specific autopilot type used and improving the control over behavior and performance of the drone (1).

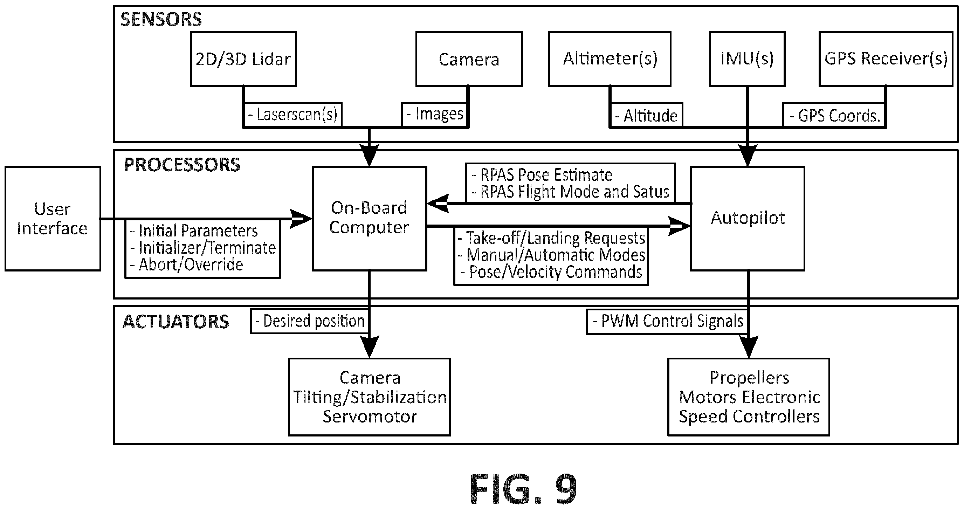

All data connections and flow between the different components of the overall system mentioned above are pictured in Figure 9.

**Claims**

1. A method of autonomous navigation for tracking objects of a wind turbine, the method comprising:

   - calibrating a computer vision sensor and a LiDAR sensor provided in a drone (1),
   - detecting by both calibrated computer vision and LiDAR sensors at least an object to be tracked by the drone, the detected object being a nacelle (13) comprising three blades (11, 11'), each of the three blades (11, 11') having four sides;
   - measuring by the LiDAR sensor a set of features of the detected nacelle (13), the set of measured features comprising the diameter ($n_D$) of the nacelle (13) and the blade length ($b_L$) of the blades (11, 11');
   - estimating a relative position of the drone (1) with respect to the detected nacelle (13);

   the method **characterized by** further comprising:

   - commanding the drone (1) to reach a target waypoint which belongs to a set of waypoints determining a trajectory comprising:

     - a nacelle control waypoint which is aligned with the axis of the nacelle (13) at a pre-configured distance from the nacelle (13), and
     - eight blade inspection waypoints for each of the three blades (11, 11'), the eight blade inspection waypoints being four root inspection waypoints and four tip inspection waypoints, each root inspection waypoint corresponding to an inspection waypoint at the root of the blades (11, 11') for each of the four sides and each tip inspection waypoint corresponding to an inspection waypoint at the tip of the blades (11, 11') for each of the four sides, and the eight blade inspection waypoints being configured as the corners of a trapezoidal prism, with rhombi as parallel bottom and top faces, the top face of all prisms being a square with diagonals equal to twice an inspection distance at the tip of the blades (11, 11'), the bottom face having a minor diagonal with the same length and a major diagonal with a length of twice an inspection distance at the root of the blades (11, 11'), wherein the eight blade inspection waypoints are defined radially around the rotation axis of the nacelle (13) keeping a distance from the rotation axis to each root inspection waypoint equal to the measured diameter ($n_D$) and keeping a distance from the rotation axis to each tip inspection waypoint equal to the measured blade length ($b_L$);

     - once the target waypoint is reached by the drone (1), adjusting the trajectory by redefining a next target waypoint from the set of waypoints to keep the detected object centered on the computer vision sensor.

2. The method according to claim 1, wherein adjusting the trajectory comprises Cartesian corrections, both horizontal and in altitude, of the nacelle control waypoint and performed equally to all blade inspection waypoints as a translation.

3. The method according to claim 2, wherein adjusting the trajectory comprises, once Cartesian corrections have been applied, Heading corrections of the nacelle control waypoint and propagated to all blade inspection waypoints as a rotation of the difference in heading angle around the vertical axis of the nacelle (13).

4. The method according to any of claims 1-3, wherein adjusting the trajectory comprises Normal corrections in blade inspection waypoints which are only propagated within their corresponding bottom and top prism face.

5. The method according to any of claims 1-4, wherein redefining the next target waypoint is based on:

- detecting by the LiDAR sensor an alignment with the axis of the nacelle (13),
- detecting by the LiDAR sensor a height of the nacelle (13),
- detecting by the LiDAR sensor a location of the tip of each blade (11, 11'),
- defining a relative inspection distance based on the inspection distance at the tip of the blades (11, 11') and the inspection distance at the root of the blades (11, 11').

6. A drone (1) for tracking objects, comprising at least a LiDAR sensor and a computer vision sensor, **characterized by** further comprising an on-board computer configured to perform the method according to any of claims 1-5.

7. A computer program product comprising program code means which, when loaded into an on-board computer of a drone (1), make said program code means execute the method according to any of claims 1-5.

**Patentansprüche**

1. Verfahren zur autonomen Navigation zum Verfolgen von Objekten einer Windturbine, wobei das Verfahren umfasst:

- Kalibrieren eines Computervisions-Sensors und eines LiDAR-Sensors, die in einer Drohne (1) vorgesehen sind,
- Erfassen, sowohl durch kalibrierte Computervisions- als auch LiDAR-Sensoren, mindestens eines von der Drohne zu verfolgenden Objekts, wobei das erfasste Objekt ein Maschinenhaus (13) mit drei Blättern (11, 11') ist, wobei jedes der drei Blättern (11, 11') vier Seiten aufweist;
- Messen, durch den LiDAR-Sensor, eines Satzes von Merkmalen des erfassten Maschinenhauses (13), wobei der Satz von gemessenen Merkmalen den Durchmesser ($n_D$) des Maschinenhauses (13) und die Blattlänge ($b_L$) der Blätter (11, 11') umfasst;
- Abschätzen einer relativen Position der Drohne (1) in Bezug auf das erfasste Maschinenhaus (13);

wobei das Verfahren **dadurch gekennzeichnet ist, dass** es ferner Folgendes umfasst:

- Befehlen der Drohne (1), einen Ziel-Wegpunkt zu erreichen, der zu einem Satz von Wegpunkten gehört, die eine Trajektorie bestimmen, der Folgendes umfasst:

- einen Maschinenhaus-Kontrollwegpunkt, der mit der Achse des Maschinenhauses (13) in einem vorkonfigurierten Abstand von dem Maschinenhaus (13) ausgerichtet ist, und
- acht Blatt-Prüfwegpunkte für jede der drei Blätter (11, 11'), wobei die acht Blatt-Prüfwegpunkte vier Fuß-Prüfwegpunkte und vier Spitzen-Prüfwegpunkte sind, wobei jeder Fuß-Prüfwegpunkt einem Prüfwegpunkt an dem Fuß der Blätter (11, 11') für jede der vier Seiten und jeder Spitzen-Prüfwegpunkt einem Prüfwegpunkt an der Spitze der Blätter (11, 11') für jede der vier Seiten entspricht, und wobei die acht Blatt-Prüfwegpunkte als die Ecken eines trapezförmigen Prismas konfiguriert sind, mit Rauten als parallele Boden- und Oberseite, wobei die Oberseite aller Prismen ein Quadrat mit Diagonalen ist, die gleich dem Zweifachen eines Prüfabstandes an der Spitze der Blätter (11, 11') sind, wobei die Unterseite eine kleine Diagonale mit der gleichen Länge und eine große Diagonale mit einer Länge von dem Zweifachen eines Prüfabstandes an dem Fuß der Blätter (11, 11') aufweist, wobei die acht Blatt-Prüfwegpunkte radial um die Drehachse des Maschinenhauses (13) definiert sind, wobei ein Abstand von der Drehachse zu jedem Fuß-Prüfwegpunkt gleich dem gemessenen Durchmesser ($n_D$) eingehalten wird und ein Abstand von der Drehachse zu jedem Spitzen-Prüfwegpunkt gleich der gemessenen Blattlänge ($b_L$) gehalten wird;

- sobald der Ziel-Wegpunkt von der Drohne (1) erreicht wird, Anpassen der Trajektorie durch Neudefinieren eines nächsten Ziel-Wegpunktes aus dem Satz von Wegpunkten, um das erfasste Objekt auf dem Computervisions-Sensor zentriert zu halten.

2. Verfahren gemäß Anspruch 1, wobei ein Einstellen der Trajektorie kartesische Korrekturen, sowohl horizontal als auch in der Höhe, des Maschinenhaus-Kontrollwegpunktes umfasst und für alle Blatt-Prüfwegpunkte als Translation gleichermaßen durchgeführt wird.

3. Verfahren gemäß Anspruch 2, wobei ein Einstellen der Trajektorie, sobald kartesische Korrekturen angewendet wurden, Kurskorrekturen des Maschinenhaus-Kontrollwegpunktes umfasst, die sich als Drehung der Differenz im Kurswinkel um die vertikale Achse des Maschinenhauses (13) auf alle Blatt-Prüfwegpunkte übertragen werden.

4. Verfahren gemäß einem der Ansprüche 1-3, wobei ein Einstellen der Trajektorie normale Korrekturen in Blatt-Prüfwegpunkten umfasst, die nur innerhalb ihrer entsprechenden unteren und oberen Prismenfläche übertragen werden.

5. Verfahren gemäß einem der Ansprüche 1-4, wobei ein Neudefinieren des nächsten Ziel-Wegpunktes auf Folgendem basiert:

- Erfassen, durch den LiDAR-Sensor, einer Ausrichtung mit der Achse des Maschinenhauses (13),
- Erfassen, durch den LiDAR-Sensor, einer Höhe des Maschinenhauses (13),
- Erfassen, durch den LiDAR-Sensor, einer Position der Spitze jedes Blattes (11, 11'),
- Definieren eines relativen Prüfabstandes basierend auf dem Prüfabstand an der Spitze der Blätter (11, 11') und dem Prüfabstand an dem Fuß der Blätter (11, 11').

6. Drohne (1) zum Verfolgen von Objekten, umfassend mindestens einen LiDAR-Sensor und einen Computervisions-Sensor, **dadurch gekennzeichnet, dass** sie ferner einen Bordcomputer umfasst, der konfiguriert ist, um das Verfahren gemäß einem der Ansprüche 1-5 durchzuführen.

7. Computerprogrammprodukt, umfassend Programmcodemittel, die, wenn sie in einen Bordcomputer einer Drohne (1) geladen werden, die Programmcodemittel dazu bringen, das Verfahren gemäß einem der Ansprüche 1-5 auszuführen.

**Revendications**

1. Procédé de navigation autonome pour suivre des objets d'une éolienne, le procédé comprenant :

- l'étalonnage d'un capteur de vision par ordinateur et d'un capteur LiDAR disposé dans un drone (1)
- la détection à la fois par le capteur de vision par ordinateur et le capteur LiDAR étalonnés d'au moins un objet à suivre par le drone, l'objet détecté étant une nacelle (13) comprenant trois pales (11, 11'), chacune des trois pales (11, 11') ayant quatre côtés ;
- la mesure par le capteur LiDAR d'un ensemble de caractéristiques de la nacelle détectée (13), l'ensemble de caractéristiques mesurées comprenant le diamètre ($n_D$) de la nacelle (13) et la longueur de pale ($b_L$) des pales (11, 11');
- l'estimation d'une position relative du drone (1) par rapport à la nacelle détectée (13) ;

le procédé étant **caractérisé en ce qu'**il comprend en outre :

- la commande du drone (1) pour atteindre un point de cheminement cible qui appartient à un ensemble de points de cheminement déterminant une trajectoire comprenant :
- un point de cheminement de commande de nacelle qui est aligné avec l'axe de la nacelle (13) à une distance préconfigurée de la nacelle (13) et
- huit points de cheminement d'inspection de pale pour chacune des trois pales (11, 11'), les huit points de cheminement d'inspection de pale étant quatre points de cheminement d'inspection de pied et quatre points de cheminement d'inspection de pointe, chaque point de cheminement d'inspection de pied correspondant à un point de cheminement d'inspection au pied des pales (11, 11') pour chacun des quatre côtés et chaque point de cheminement d'inspection de pointe correspondant à un point de cheminement d'inspection à la pointe des pales (11, 11') pour chacun des quatre côtés, et les huit points de cheminement d'inspection de pale étant configurés comme les coins d'un prisme trapézoïdal, avec des losanges comme faces inférieure et supérieure parallèle, la face supérieure de tous les prismes étant un carré avec des diagonales égales à deux fois une distance d'inspection à la pointe des pales (11, 11'), la face inférieure ayant une diagonale mineure de même longueur et une diagonale majeure d'une longueur de deux fois une distance d'inspection au pied des pales (11, 11'), dans lequel les huit points de cheminement d'inspection de pale sont définis radialement autour de l'axe de rotation de la nacelle (13) en maintenant une distance de l'axe de rotation à chaque point de cheminement d'inspection de pied égale au diamètre mesuré ($n_D$) et en maintenant une distance de l'axe de rotation à chaque point de cheminement d'inspection de pointe égale à la longueur de pale mesurée ($b_L$) ;
- une fois que le point de cheminement cible est atteint par le drone (1), l'ajustement de la trajectoire en redéfinissant un point de cheminement cible suivant parmi l'ensemble de points de cheminement pour maintenir l'objet détecté centré sur le capteur de vision par ordinateur.

2. Procédé selon la revendication 1, dans lequel l'ajustement de la trajectoire comprend des corrections cartésiennes à la fois horizontales et en altitude du point de cheminement de commande de nacelle et effectuées de manière égale sur tous les points de cheminement d'inspection de pale comme une translation.

3. Procédé selon la revendication 2, dans lequel l'ajustement de la trajectoire comprend, une fois que les corrections cartésiennes ont été appliquées, des corrections de cap du point de cheminement de commande de nacelle et leur propagation à tous les points de cheminement d'inspection de pale sous la forme d'une rotation de la différence d'angle de cap autour de l'axe vertical de la nacelle (13).

4. Procédé selon l'une quelconque des revendications 1 à 3, dans lequel l'ajustement de la trajectoire comprend des corrections normales en points de cheminement d'inspection de pale qui sont uniquement propagées dans leurs faces de prisme inférieure et supérieure correspondantes.

5. Procédé selon l'une quelconque des revendications 1 à 4, dans lequel la redéfinition du point de cheminement cible suivant est basée sur :

   - la détection par le capteur LiDAR d'un alignement avec l'axe de la nacelle (13),
   - la détection par le capteur LiDAR d'une hauteur de la nacelle (13),
   - la détection par le capteur LiDAR d'un emplacement de la pointe de chaque pale (11, 11'),
   - la définition d'une distance d'inspection relative sur la base de la distance d'inspection à la pointe des pales (11, 11') et de la distance d'inspection au pied des pales (11, 11').

6. Drone (1) pour le suivi d'objets, comprenant au moins un capteur LiDAR et un capteur de vision par ordinateur, **caractérisé en ce qu'**il comprend en outre un ordinateur de bord configuré pour effectuer le procédé selon l'une quelconque des revendications 1 à 5.

7. Produit de programme informatique comprenant des moyens de codage de programme qui, lorsqu'ils sont chargés dans un ordinateur de bord d'un drone (1), amènent lesdits moyens de codage de programme à exécuter le procédé selon l'une quelconque des revendications 1 à 5.

10

11

1

13

11'

12

30

20

# FIG. 1

**FIG. 2**

FIG. 3

**FIG. 4**

**FIG. 5**

FIG. 6

FIG. 7

**FIG. 8A**

$\Delta d$

$\Delta d > d_C$ | $\Delta d < d_C$

$d_I$

**FIG. 8B**

$b\Delta$

$\Delta d < d_F$ | $\Delta d > d_F$

$d_I$

**FIG. 8C**

$\theta_M$

$\theta_O > \theta_M$

$\theta_O < \theta_M$

$\theta_M$

## SENSORS

| 2D/3D Lidar | Camera | Altimeter(s) | IMU(s) | GPS Receiver(s) |

- Laserscan(s)   - Images   - Altitude   - GPS Coords.

## PROCESSORS

User Interface

- Initial Parameters
- Initializer/Terminate
- Abort/Override

On-Board Computer

- RPAS Pose Estimate
- RPAS Flight Mode and Satus

- Take-off/Landing Requests
- Manual/Automatic Modes
- Pose/Velocity Commands

Autopilot

## ACTUATORS

- Desired position

- PWM Control Signals

Camera Tilting/Stabilization Servomotor

Propellers Motors Electronic Speed Controllers

## FIG. 9

EP 3 454 159 B1

**EP 3 454 159 B1**

**REFERENCES CITED IN THE DESCRIPTION**

**Patent documents cited in the description**

- EP 2527649 A1
- WO 2017050893 A1
- US 2016017866 A1